# EUROPÄISCHE PATENTSCHRIFT

(11) **EP 3 430 244 B1**
(45) Veröffentlichungstag und Bekanntmachung des Hinweises auf die Patenterteilung: **04.03.2020**
(21) Anmeldenummer: 17720411.2
(22) Anmeldetag: 21.04.2017
(51) Int. Cl.: F01K 13/02

(54) **SYNCHRONISIERUNG EINER TURBINE MIT EINEM WECHSELSTROMNETZ GEMÄSS EINER SOLLTRAJEKTORIE FÜR DEN SOLLDIFFERENZWINKEL**
SYNCHRONISATION OF A TURBINE WITH AN ALTERNATING CURRENT NETWORK ACCORDING TO A TARGET TRAJECTORY FOR THE TARGET DIFFERENCE ANGLE
SYNCHRONISATION D'UNE TURBINE A L'AIDE D'UN RESEAU A COURANT ALTERNATIF SELON UNE TRAJECTOIRE THEORIQUE POUR L'ANGLE DIFFERENTIEL THEORIQUE

(30) Priorität: 31.05.2016 EP 16172067
(43) Veröffentlichungstag der Anmeldung: 23.01.2019
(73) Patentinhaber: Siemens Aktiengesellschaft, 80333 München (DE)
(72) Erfinder: ZIMMER, Gerta, 45468 Mülheim an der Ruhr (DE); HEUE, Matthias, 44879 Bochum (DE)
(86) Internationale Anmeldenummer: PCT/EP2017/059508
(87) Internationale Veröffentlichungsnummer: WO 2017/207167

(56) Entgegenhaltungen:
- EP-A1- 1 914 394
- EP-A1- 2 813 675
- EP-A1- 3 012 420

## Beschreibung

Die Erfindung betrifft ein Verfahren zur Synchronisierung einer Turbine mit einem Stromnetz und eine zugehörige Steuereinrichtung.

Bei der Stromerzeugung in Kraftwerken, in denen der erzeugte Strom in ein Stromnetz eingespeist wird, ist darauf zu achten, dass der Strom phasenrichtig eingespeist wird. In thermischen Kraftanlagen, in denen der Strom in von Turbinen angetriebenen Generatoren erzeugt wird, ist also die Turbine in eine zur Phase des Stromnetzes passende Winkellage zu bringen, damit der Strom eingespeist werden kann. Genau genommen kommt es selbstverständlich auf die Winkellage des Generatorrotors an. Da der Rotor des Generators im Regelfall fest mit dem Rotor der Turbine verbunden ist, wird vorliegend stets davon gesprochen, dass die Turbine synchronisiert werden muss, wenngleich es eigentlich um den Generator geht.

Im Stand der Technik ist es üblich die Turbine unabhängig von der Phasenlage des Stromnetzes auf Netzfrequenz zu bringen. Sodann wird die Turbine mit Hilfe eines sogenannten Synchronisiergeräts in die richtige Winkellage gebracht. Dazu wird die Turbine solange leicht beschleunigt oder abgebremst, salopp kann man von einen Hin- und Herfahren sprechen, bis die Winkellage passend ist.

Aus der EP 3 012 420 A1 ist ein Verfahren zum Synchronisieren einer Turbine mit dem Stromnetz bekannt. Dieses umfasst die Schritte: 1) Beschleunigen der Turbine bis zu einer Frequenz im Bereich der Netzfrequenz; 2) Erfassen eines Differenzwinkels zwischen Turbine und Wechselstromnetz; 3) Erfassen einer Differenzgeschwindigkeit zwischen Turbine und Wechselstromnetz; 4) Beschleunigen oder Verzögern der Turbine derart, dass die Turbine einer Solltrajektorie folgt, wobei die Solltrajektorie eine vorab errechnete Trajektorie ist, die in Abhängigkeit vom Differenzwinkel eine Solldifferenzgeschwindigkeit angibt, die vorhanden sein soll, damit bei übereinstimmender Geschwindigkeit von Turbine und Wechselstromnetz eine für eine synchrone Einspeisung geeignete Zielwinkellage zwischen Turbine und Wechselstromnetz erreicht wird.

Aufgabe der vorliegenden Erfindung ist es ein Verfahren zur verbesserten Synchronisierung einer Turbine mit einem Wechselstromnetz zu schaffen. Die Lösung dieser Aufgabe findet sich insbesondere in den unabhängigen Ansprüchen. Die Unteransprüche geben Ausführungsformen an. Weitere Einzelheiten sind der Beschreibung zu entnehmen.

Es wurde erkannt, dass ein Verfahren zur Synchronisierung einer Turbine mit einem Wechselstromnetz mit einer Netzfrequenz bereit zu stellen ist, das folgende Schritte aufweist.
Schritt A) Beschleunigen der Turbine bis zu einer Nenndrehzahl ohne Berücksichtigung eines Differenzwinkels zwischen Turbine und Wechselstromnetz;
Schritt B): Erfassen eines Differenzwinkels zwischen Turbine und Wechselstromnetz;
Schritt C) Beschleunigen oder Verzögern der Turbine derart, dass die Differenzgeschwindigkeit einer Solltrajektorie folgt, wobei die Solltrajektorie eine Trajektorie ist, die abhängig von dem gemessenen Differenzwinkel eine Solldrehzahl angibt, damit eine für eine synchrone Einspeisung geeignete Zielwinkellage zwischen Turbine und Wechselstromnetz erreicht wird. Der Zusammenhang zwischen der Trajektorie und dem finalen Zielwinkel ergibt sich dabei aus einer Funktion, mit der der gemessene Differenzwinkel in den Zielwinkel überführt wird. Ist der gemessene Differenzwinkel zu groß, muss die Turbine beschleunigt werden, ist er zu klein, muss sie abgebremst werden.

Schritt A) unterscheidet sich nicht von der im Stand der Technik üblichen Vorgehensweise. Mit dem Begriff Nenndrehzahl soll klargestellt werden, dass es sich nicht um die tatsächliche Netzfrequenz handeln muss. Bekanntlich kommen im Netz immer wieder geringe Schwankungen vor. Diese können in Schritt A) unberücksichtigt bleiben, so dass eine Nenndrehzahl gewählt werden kann, die von der tatsächlichen Netzfrequenz abweicht. Dies soll nicht ausschließen, dass die Nenndrehzahl der tatsächlichen Netzfrequenz entspricht. Dies kann sich durch den Netzzustand ergeben. Zudem soll es auch möglich sein, die Nenndrehzahl durch laufende Messungen mit der tatsächlichen Netzfrequenz in Einklang zu bringen.

Wegen der oben dargestellten Frequenzschwankungen ist es sinnvoll auch die Netzfrequenz zu erfassen. Selbiges gilt verständlicherweise noch mehr für die Phasenlage des Netzes.

Für die Erfindung entscheidend ist der Schritt C), nämlich das Beschleunigen oder Verzögern der Turbine derart, dass die Differenzgeschwindigkeit einer Solltrajektorie folgt, wobei die Solltrajektorie eine Trajektorie ist, die abhängig von dem gemessenen Differenzwinkel und einer Funktion, die den Messwinkel in den Zielwinkel überführt, eine Soll-Differenzgeschwindigkeit angibt, damit eine für eine synchrone Einspeisung geeignete Zielwinkellage zwischen Turbine und Wechselstromnetz erreicht wird. Es geht freilich nicht nur darum die Zielwinkellage zu erreichen; es soll auch zügig erfolgen. Eben dies ermöglicht das hier vorgestellte Verfahren.

Wenngleich eine Vielzahl von Funktionen zum Überführen des gemessenen Differenzwinkels in den Zielwinkel in Betracht kommt, bietet sich in der Regel eine Rampenfunktion an, also ein linearer Verlauf des Zielwinkels ausgehend vom erfassten Differenzwinkel zu Beginn der Rampenfunktion bis zur gewünschten Zielwinkellage.

Die Solltrajektorie beginnt beim erfassten Differenzwinkel zwischen Turbine und Netz zu Beginn von Schritt C) mit dem erfassten Differenzwinkel und mündet in die Zielwinkellage. In anderen Worten gesagt verläuft die Soll-Differenzgeschwindigkeit abhängig vom erfassten Differenzwinkel bei Beginn von Schritt C), also beim Beginn des Folgens der Solltrajektorie, bis zur Zielwinkellage, also dem Differenzwinkel, der letztlich angestrebt wird.

Dabei ist zu beachten, dass die Solltrajektorie darauf beruht, dass ein Solldifferenzwinkel vorgegeben wird. Aus der Abweichung zwischen dem Solldifferenzwinkel und dem tatsächlichen Differenzwinkel wird die Solldrehzahl bestimmt. Die Solldrehzahl ist eine Größe, die von den üblichen Turbinensteuereinheiten genutzt werden kann. Daher wird von einer Bestimmung der Solldrehzahl gesprochen.

Es genügt im einfachen Fall den Differenzwinkel zu erfassen und die Turbine entsprechend zu beschleunigen oder zu verzögern. Nach der Durchführung von Schritt A) stimmen die Geschwindigkeit von Turbine und Netz bereits hinreichend überein. Die Beschleunigung oder Verzögerung der Turbine beim Folgen der Solltrajektorie erfolgt in so geringem Maße, dass keine relevante Differenz von Turbinenfrequenz und Netzfrequenz durch das Folgen der Solltrajektorie auftritt. Vielmehr sorgt die Vorgabe die Zielwinkellage zu erreichen und zu halten für ein Übereinstimmen von Netzfrequenz und Turbinenfrequenz.

Mögliche Schwankungen der Netzfrequenz werden automatisch berücksichtigt, da die Netzfrequenz und die Turbinenfrequenz übereinstimmen müssen, wenn die Zielwinkellage gehalten wird.

An dieser Stelle soll nochmals betont werden, dass Schritt A) ein Beschleunigen der Turbine ohne Berücksichtigung des Differenzwinkels vorsieht. Es ist also durchaus damit zu rechnen, dass am Ende von Schritt A), oder sehr kurze Zeit davor oder danach, bereits eine genaue Übereinstimmung von Turbinenfrequenz und Netzfrequenz vorliegt und dennoch nicht mit der Einspeisung begonnen werden kann, da die Winkellage zwischen Netz und Turbine nicht geeignet ist. Von daher wäre es durchaus sinnvoll bereits während Schritt A) den Differenzwinkel zu erfassen. Dies würde allerdings stärkere Modifikationen an dem im Stand der Technik bekannten Verfahren erfordern, wodurch auch eine weitergehende Anpassung der Messtechnik erforderlich werden könnte. Um dies zu vermeiden, kann Schritt A) wie im eingangs erwähnten Stand der Technik durchgeführt werden. Die sich daran anschließenden Schritte B) und C) können mit dem bekannten Synchronisiergerät durchgeführt werden, das im Regelfall lediglich anders programmiert werden muss. Das Verfahren eignet sich also insbesondere für bereits bestehende Kraftwerke, bei denen möglichst wenige bauliche Änderungen vorgenommen werden sollen.

Auch ist es verbreitet, dass neuen und vorteilhaften Verfahren selbst in der Fachwelt mit Unbehagen begegnet wird. Dieses Unbehagen kann vorliegend sehr reduziert werden, da scheinbar eine hohe Ähnlichkeit mit dem eingangs geschilderten bekannten Synchronisier-Verfahren gegeben ist.

Nach Schritt A) hat die Turbine die Netzfrequenz bereits praktisch erreicht. Nach Erreichen der Zielwinkellage in Schritt C) kann sofort mit der Stromeinspeisung begonnen werden. Auf diese Weise lässt sich die Zeit bis zum Beginn der Stromerzeugung reduzieren. Damit kann ein höherer wirtschaftlicher Ertrag erzielt werden. Ein besonders wichtiger Gesichtspunkt dabei ist, dass der Strom nach der Entscheidung das Kraftwerk anzufahren, mitunter zeitnah benötigt wird. In einem solchen Fall kann es für die Stabilität des Stromnetzes von entscheidender Bedeutung sein, dass schnell mit der Stromerzeugung begonnen wird. Dabei können wenige Minuten von hoher wirtschaftlicher Bedeutung sein. Im Stand der Technik werden, nachdem die Turbinenfrequenz in etwa der Netzfrequenz entspricht, für das Erreichen der gewünschten Zielwinkellage vielfach noch zwei bis drei Minuten benötigt. Mit der vorliegenden Erfindung kann diese Zeit deutlich reduziert werden.

Das Beschleunigen oder Verzögern der Turbine, derart dass der Differenzwinkel der Solltrajektorie folgt, bis zum Erreichen der Zielwinkellage kann zügig erfolgen. Die erforderliche Zeit hängt vom Differenzwinkel am Beginn des Folgens der Solltrajektorie ab. Die Zeit zum Erreichen der Zielwinkellage hängt auch von der Solltrajektorie ab, also davon wie schnell sich der Solldifferenzwinkel ändert. Anders ausgedrückt, je steiler die Solltrajektorie verläuft, umso schneller ist der Solldifferenzwinkel gleich der Zielwinkellage. Freilich kann die Solltrajektorie nicht beliebig steil verlaufen, schließlich muss die Turbine so beschleunigt oder verzögert werden können, dass der Differenzwinkel tatsächlich der Solltrajektorie folgen kann. Die mögliche Steilheit der Solltrajektorie hängt empfindlich von der Trägheit der Turbine ab. Im Allgemeinen gilt, dass bei einer schwereren und damit trägeren Turbine die Solltrajektorie weniger steil verlaufen kann.

In vielen Fällen wird beim Beschleunigen der Turbine bis zur Nenndrehzahl die Nenndrehzahl überschritten. Nachfolgend erfolgt ein Verzögern.

Zum Verständnis des Überschreitens der Nenndrehzahl ist zu bedenken, dass die Beschleunigung von der zugeführten Dampfmenge abhängt und diese wiederum von der Stellung eines Dampfzufuhrventils. Die Änderung der Stellung des Dampfzufuhrventils benötigt aber Zeit. Entsprechend benötigt die Änderung der Beschleunigung gewisse Zeit.

Durch eine entsprechende Wahl der Beschleunigung kann das Überschießen deutlich reduziert werden. Genauer gesagt wird nicht versucht die Beschleunigung schlagartig zu ändern, sondern kontinuierlich abzusenken. So ist es möglich das Überschießen deutlich zu reduzieren. Vorliegend haben sich Werte vom kleiner als 0,02 Hz erreichen lassen. Soweit dies der Fall ist, erfolgt Schritt A) nicht so wie im Stand der Technik üblich. Dies ändert aber nichts an der obigen Aussage, dass Schritt A) gemäß dem Stand der Technik erfolgen kann. Insbesondere gilt, dass dazu keine Berücksichtigung des Differenzwinkels zwischen Turbine und Wechselstromnetz erforderlich ist.

In einer Ausführungsform sieht die Solltrajektorie einen linearen Verlauf des Solldifferenzwinkels vor. Der Solldifferenzwinkel verläuft damit nach Art einer Rampe. Aus der Abweichung zwischen dem Solldifferenzwinkel dem erfassten Differenzwinkel wird die zur Regelung verwendete Solldrehzahl bestimmt. Dabei kann mit dem erfassten Differenzwinkel begonnen werden, wobei der Solldifferenzwinkel linear über die Zeit bis zur Zielwinkellage verläuft. Dies erlaubt eine einfache Solltrajektorie.

In einer Ausführungsform wird die Turbine beschleunigt, wenn der Differenzwinkel größer als der durch die Solltrajektorie gegebene Solldifferenzwinkel ist, und abgebremst, wenn der Differenzwinkel kleiner als der durch die Solltrajektorie gegebene Solldifferenzwinkel ist. Es mag auch andere Möglichkeiten geben, aber dieser bereits oben beschriebene Weg zum Folgen der Solltrajektorie ist zielführend.

In einer Ausführungsform wird die Differenzgeschwindigkeit zwischen Turbine und Wechselstromnetz erfasst und beim Folgen der Solltrajektorie berücksichtigt. Diese Ist-Differenzgeschwindigkeit wird, abhängig von der durch den Differenzwinkel definierten Soll- Differenzgeschwindigkeit ausgeregelt.

Zur Klarstellung sei erwähnt, dass unter der "Differenzgeschwindigkeit" die messtechnisch erfasste Differenzgeschwindigkeit, also die messtechnisch erfasste Frequenzdifferenz zwischen Turbine und Netz verstanden wird. Somit stellt die Differenzgeschwindigkeit die Frequenzdifferenz zwischen Turbine und Netz dar, wobei die Frequenzdifferenz messtechnisch erfasst sein kann. Demgegenüber wird die Solldifferenzgeschwindigkeit über die Regelungskennlinie aus der Abweichung zwischen Solldifferenzwinkel und erfasstem Differenzwinkel gebildet.

Stets kann anstelle von der Differenzgeschwindigkeit auch von der Frequenzdifferenz gesprochen werden. Vorliegend wird von der Zielwinkellage gesprochen, während diese vielfach als gewünschte Phasenlage bezeichnet wird.

In einer Ausführungsform wird zur Durchführung der Schritte B) und C) ein im Stand der Technik bekanntes Synchronisiergerät genutzt. Wie weiter oben schon geschildert ist dies möglich und bringt den Vorteil mit sich, dass die Änderungen an der Anlage sehr niedrig ausfallen.

Die Erfindung betrifft auch eine Steuereinrichtung für eine Turbine, die eingerichtet ist, eine Turbine nach dem oben geschilderten Verfahren zu steuern. Wie bereits erwähnt sind dafür sehr niedrige Modifikationen erforderlich. Oft genügt es eine entsprechende Programmierung vorzunehmen.

In einer Ausführungsform des Steuergeräts ist ein Synchronisiergerät vorhanden, das ausgebildet ist einen Differenzwinkel zwischen Turbine und Wechselstromnetz zu erfassen und an eine Turbinensteuereinheit Anweisungen zur Beschleunigung oder Verzögerung der Turbine zu übergeben.

Wie erwähnt sind derartige Synchronisiergeräte oft bereits vorhanden um die Turbine wie eingangs geschildert solange leicht zu beschleunigen oder abzubremsen bis die Winkellage passend ist. Ein solches Synchronisiergerät muss den Differenzwinkel erfassen können. Damit kann es auch für das Verfahren gemäß der vorliegenden Erfindung genutzt werden.

An dieser Stelle soll kurz auf die Turbinensteuereinheit eingegangen werden. Die Turbinensteuereinheit regelt über die Stellung eines Ventils, welches die Dampfzufuhr zur Dampfturbine einstellt, die Geschwindigkeit der Turbine. Die verbreiteten Turbinensteuereinheiten benötigen als Eingangssignal eine Solldrehzahl. Nach dem vorliegenden Verfahren wird vom Synchronisiergerät eine Solldrehzahl ermittelt, die an die Turbinensteuereinheit übergeben werden kann.

Die Erfindung soll unter Nutzung von Figuren nachfolgend anhand eines Ausführungsbeispiels näher erläutert werden. Dabei zeigen:
- Fig. 1: ein drehzahlgeregeltes Beschleunigen der Turbine;
- Fig. 2: einen beispielhaften Verlauf des Differenzwinkels nach Erreichen einer Nenndrehzahl;
- Fig. 3: eine Ausregelung des Differenzwinkels zu einer Zielwinkellage über eine Rampen-Funktion;
- Fig. 4: eine Änderung der Drehzahl der Turbine beim Synchronisieren;
- Fig. 5: einen schematischen Aufbau der Regelung zum Erreichen der Zielwinkellage;
- Fig. 6: die Regelung der Turbinenfrequenz bis zur Nenndrehzahl.

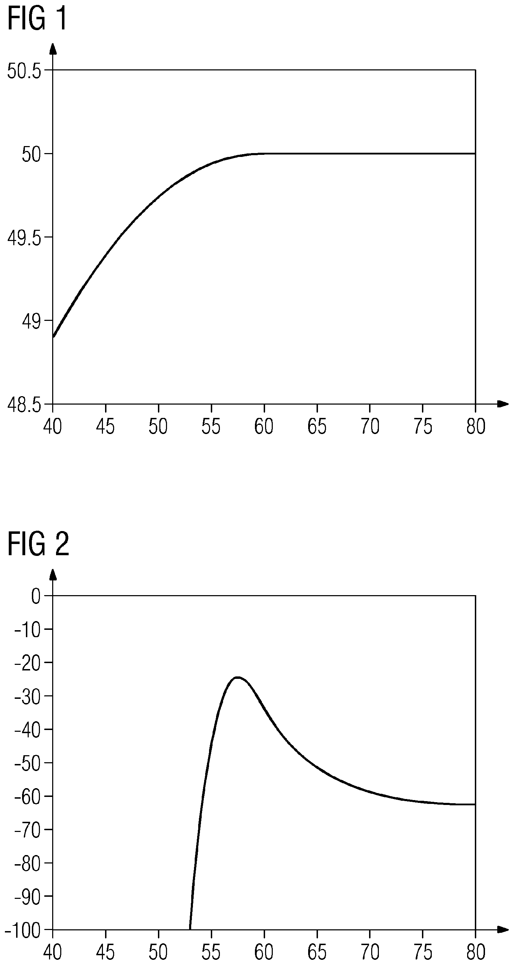

In Figur 1 ist auf der Rechtswertachse die Zeit in Sekunden und der Hochwertachse die Turbinenfrequenz in Hertz angegeben. Gezeigt ist eine drehzahlgeregelte Beschleunigung bis zu einer Nenndrehzahl von 50 Hertz. Die Beschleunigung ist geregelt, so dass praktisch kein Überschießen erfolgt, das heißt eine Beschleunigung der Turbine über die Nenndrehzahl hinaus wird weitgehend vermieden.

In Figur 2 ist auf der Rechtswertache wiederum die Zeit in Sekunden und auf der Hochwertachse der erfasste Differenzwinkel in Grad. Es wird ebenso wie in Figur 1 die Zeit von 40 s bis 80 s nach Beginn des Beschleunigens gezeigt. Bei diesem beispielhaften Verlauf des Differenzwinkels ergibt sich nach 80 s, also nach Abschluss des Beschleunigens auf die Nenndrehzahl ein Differenzwinkel von -62,5°.

Die Turbine eilt also dem Netz um 62,5° voraus. Es gilt daher nun die Turbine langsamer zu drehen, um einen Zielwinkel von 0° zu erreichen, wobei freilich bei Erreichen des Zielwinkels Turbinenfrequenz und Netzfrequenz übereinstimmen müssen.

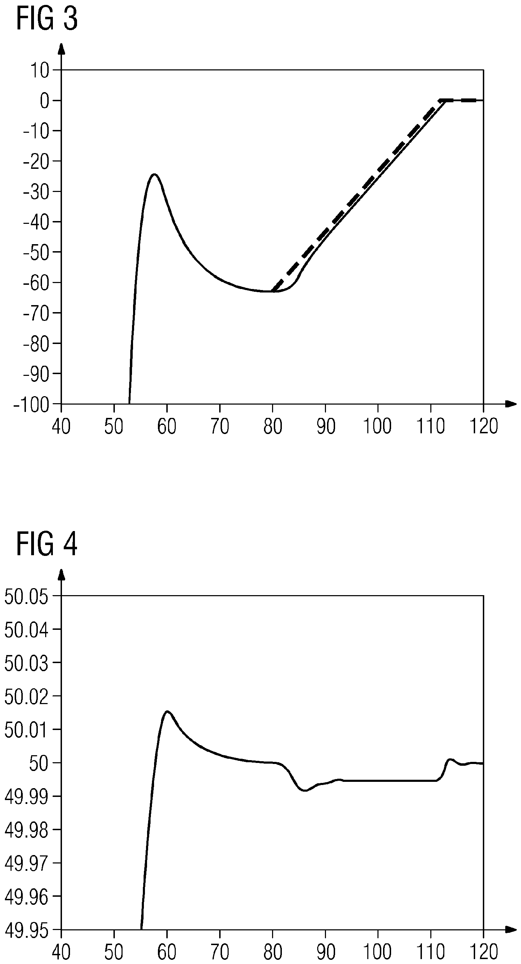

Figur 3 macht die Regelung verständlich. Auf der Rechtswertachse ist die Zeit nach Beginn des Beschleunigens in Sekunden aufgetragen, auf der Hochwertachse der Differenzwinkel zwischen Turbine und Netz. Die durchgezogene Linie zeigt den Verlauf des tatsächlichen Differenzwinkels. Vom Zeitwert 55 s bis zum Zeitwert 80 s ist der auf Figur 2 bekannte Verlauf zu erkennen. Danach beginnt ein geregeltes Anfahren der Zielwinkellage. Hierzu ist die gestrichelte Linie zu beachten. Diese gibt einen Solldifferenzwinkel zum jeweiligen Zeitpunkt an. Die Linie beginnt beim Zeitwert 80 s mit dem tatsächlichen Differenzwinkel von -62,5°. Letztlich wird ein Differenzwinkel von 0° angestrebt; die Zielwinkellage ist also 0°.

Um dies zu erreichen wird ein Solldifferenzwinkelverlauf gemäß der gestrichelten Linie vorgegeben. Dabei handelt es sich um eine Rampe, also einen über die Zeit linearen Verlauf zwischen dem tatsächlichen Differenzwinkel bei Beginn der Regelung, vorliegend also -62,5° und der Zielwinkellage, vorliegend also wie zumeist 0°.

Nun ist es möglich den erfassten Differenzwinkel laufend mit dem Solldifferenzwinkel zu vergleichen und die Turbine entsprechend zu beschleunigen oder zu verzögern. Wie bereits weiter oben im Zusammenhang mit dem Überschießen ausgeführt, kann die Beschleunigung oder Verzögerung nicht beliebig schnell geändert werden. Dem wird durch eine begrenzte Steigung der Rampe sowie der regelungstechnischen Rückführung der Abweichung zwischen Solldifferenzwinkel und erfasstem Differenzwinkel Rechnung getragen.

Durch den geraden Verlauf des Solldifferenzwinkels bei der Zielwinkellage wird von der Regelung die Vorgabe gemacht, dass der Differenzwinkel konstant bleibt. Wenn der Differenzwinkel konstant bleibt, wird automatisch erreicht, dass Turbinenfrequenz und Netzfrequenz übereinstimmen.

Den sich durch die Regelung ergebenden Verlauf der Turbinenfrequenz macht Figur 4 deutlich. Auf der Rechtswertachse ist wiederum die Zeit nach Beginn des Beschleunigens in Sekunden aufgetragen und auf der Hochwertachse die Turbinenfrequenz in Hertz. Betrachtet man den Verlauf der Turbinenfrequenz im Bereich von 55 s bis 80 s nach Beginn der Beschleunigung, wird ein leichtes Überschießen der Turbine, also ein leichtes Beschleunigen über die Netzfrequenz hinaus ersichtlich.

Der nun eigentlich interessierende Bereich ist der Bereich ab 80 s nach Beginn des Beschleunigens. Wie oben dargelegt muss bei dem erfassten Differenzwinkel von -62,5° die Turbine vorübergehend langsamer sein als das Netz. Dies wird dadurch erreicht, dass wie in Figur 3 erläutert, dem Solldifferenzwinkel gefolgt wird.

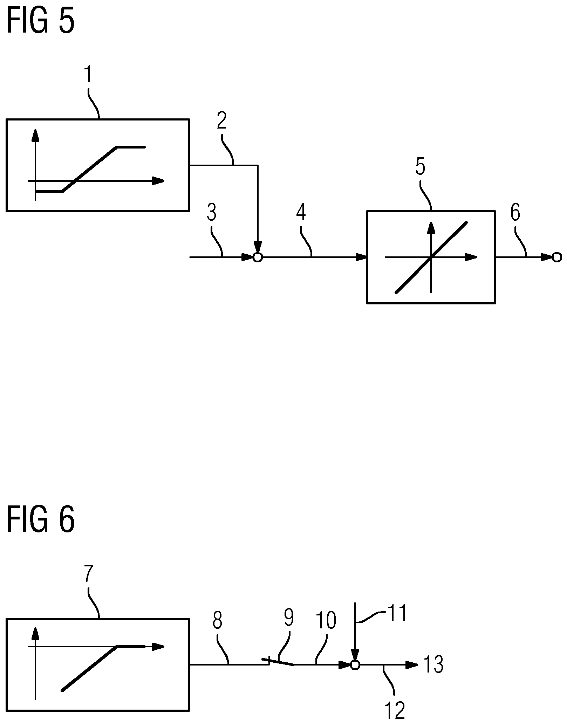

In Figur 5 ist der Aufbau der Regelung schematisch geschildert. Ein Solltrajektorienmodul 1 gibt einen Verlauf des Solldifferenzwinkels 2 vor. Dabei wird im Regelfall wie in Figur 3 erläutert eine Rampe gewählt, die vom bei Beginn der Regelung erfassten Differenzwinkel 3 bis zur gewünschten Zielwinkellage über die Zeit linear verläuft. Nach Erreichen der Zielwinkellage verläuft die Solltrajektorie gerade, es wird also gefordert, dass die Zielwinkellage gehalten wird.

Das Solltrajektorienmodul 1 gibt also den Solldifferenzwinkel 2 aus. Dieser wird mit dem erfassten Differenzwinkel 3 verglichen. Der so gewonnene Differenzwinkelvergleichswert 4 wird an eine Auswerteeinheit 5 übergeben, die daraus ermittelt, um welchen Wert die Turbinenfrequenz erhöht oder gesenkt werden soll. Es wird so eine Sollfrequenz 6 ermittelt, die an eine Turbinensteuereinheit übergeben werden kann. Die Turbinensteuereinheit hat die Aufgabe die Ventilstellung zur Dampfzufuhr und damit die Turbine zu steuern. Bei den üblichen Turbinensteuereinheiten erfolgt dies unter anderem abhängig von einer Sollfrequenz. Daher wird, obwohl es eigentlich um die Beschleunigung oder Verzögerung der Turbine geht, eine Sollfrequenz 6 ermittelt Die Turbinensteuereinheit freilich sorgt letztlich wiederum für eine Beschleunigung oder Verzögerung.

In Figur 6 ist die Regelung der Turbinenfrequenz bis zur Nenndrehzahl dargestellt. Ein Beschleunigungsmodul 7 gibt eine Sollbeschleunigung 8 vor, also ein lineares Beschleunigen bis zu einer Nenndrehzahl. Die Sollbeschleunigung 8 wird ausgegeben. Als Schaltkriterium 9 fließt weiterhin ein, dass eine Verstellzeit zu berücksichtigen ist, bis die Beschleunigung auf null gesetzt werden kann, da wie weiter oben geschildert die Verstellung des Ventils, das die Dampfzufuhr zur Turbine steuert, gewisse Zeit benötigt. Unter Berücksichtigung des Schaltkriteriums 9 wird die Sollbeschleunigung 8 in eine Solldrehzahländerung 10 gewandelt. Mit Beachtung der Netzfrequenz 11 ergibt sich eine Turbinensollfrequenz 12, die an die Turbinensteuereinheit 13 übergeben wird.

## Patentansprüche

1. Verfahren zur Synchronisierung einer Turbine mit einem Wechselstromnetz mit einer Netzfrequenz (11) aufweisend folgende Schritte:
A) Beschleunigen der Turbine bis zu einer Nenndrehzahl ohne Berücksichtigung eines Differenzwinkels zwischen Turbine und Wechselstromnetz;
B) Erfassen eines Differenzwinkels (3) zwischen Turbine und Wechselstromnetz;
C) Beschleunigen oder Verzögern der Turbine derart, dass die Differenzgeschwindigkeit einer Solltrajektorie folgt,
wobei die Differenzgeschwindigkeit die messtechnisch erfasste Frequenzdifferenz zwischen Turbine und Wechselstromnetz darstellt,
wobei die Solltrajektorie eine Trajektorie ist, die abhängig von dem erfassten Differenzwinkel (3) eine Solldrehzahl angibt, damit eine für eine synchrone Einspeisung geeignete Zielwinkellage zwischen Turbine und Wechselstromnetz erreicht wird.

2. Verfahren nach Anspruch 1,
wobei die Solltrajektorie einen linearen Verlauf eines Solldifferenzwinkels (2) vorsieht.

3. Verfahren nach einem der vorhergehenden Ansprüche,
wobei die Turbine beschleunigt wird, wenn der Differenzwinkel größer als der durch die Solltrajektorie gegebene Solldifferenzwinkel ist, und abgebremst wird, wenn der Differenzwinkel kleiner als der durch die Solltrajektorie gegebene Solldifferenzwinkel ist.

4. Verfahren nach einem der vorhergehenden Ansprüche,
wobei die Differenzgeschwindigkeit zwischen Turbine und Wechselstromnetz erfasst wird und beim Folgen der Solltrajektorie berücksichtigt wird.

5. Verfahren nach einem der vorhergehenden Ansprüche,
wobei zur Durchführung der Schritte B) und C) ein im Stand der Technik bekanntes Synchronisiergerät genutzt wird.

6. Steuereinrichtung für eine Turbine,
**dadurch gekennzeichnet, dass** sie eingerichtet ist, eine Turbine nach einem Verfahren gemäß einem der vorhergehenden Ansprüche zu steuern.

7. Steuereinrichtung nach dem vorhergehenden Anspruch,
wobei ein Synchronisiergerät vorhanden ist, das ausgebildet ist einen Differenzwinkel (3) zwischen Turbine und Wechselstromnetz und eine Differenzgeschwindigkeit zwischen Turbine und Wechselstromnetz zu erfassen und an eine Turbinensteuereinheit Anweisungen zur Beschleunigung oder Verzögerung der Turbine zu übergeben,
wobei die Differenzgeschwindigkeit die messtechnisch erfasste Frequenzdifferenz zwischen Turbine und Wechselstromnetz darstellt.

## Claims

1. Method for synchronizing a turbine with an AC network having a network frequency (11), comprising the following steps:
A) accelerating the turbine up to a nominal rotational speed without taking into consideration a difference angle between turbine and AC network;
B) detecting a difference angle (3) between turbine and AC network;
C) accelerating or decelerating the turbine such that the differential speed follows a target trajectory,
wherein the differential speed represents the metrologically detected frequency difference between turbine and AC network,
wherein the target trajectory is a trajectory which specifies a target rotational speed in dependence on the detected difference angle (3), so that a target angular position suitable for a synchronous supply is achieved between turbine and AC network.

2. Method according to Claim 1,
wherein the target trajectory provides a linear curve of a target difference angle (2).

3. Method according to any one of the preceding claims,
wherein the turbine is accelerated if the difference angle is greater than the target difference angle given by the target trajectory and decelerated if the difference angle is less than the target difference angle given by the target trajectory.

4. Method according to any one of the preceding claims,
wherein the differential speed between turbine and AC network is detected and taken into consideration when following the target trajectory.

5. Method according to any one of the preceding claims,
wherein a synchronizing device known in the prior art is used to carry out steps B) and C).

6. Control device for a turbine,
**characterized in that** it is configured to control a turbine according to a method according to any one of the preceding claims.

7. Control device according to the preceding claim,
wherein a synchronizing device is provided, which is designed to detect a difference angle (3) between turbine and AC network and a differential speed between turbine and AC network and to transfer instructions for acceleration or deceleration of the turbine to a turbine control unit,
wherein the differential speed represents the metrologically detected frequency difference between turbine and AC network.

## Revendications

1. Procédé de synchronisation d'une turbine à un réseau de courant alternatif ayant une fréquence (11) de réseau, comportant les stades suivants :
A) accélération de la turbine jusqu'à une vitesse de rotation nominale, sans tenir compte d'un angle différentiel entre la turbine et le réseau de courant alternatif ;
B) détection d'un angle (3) différentiel entre la turbine et le réseau de courant alternatif ;
C) accélération ou décélération de la turbine, de manière à ce que la vitesse différentielle suive une trajectoire de consigne, la vitesse différentielle représentant la différence de fréquence détectée par une technique de mesure entre la turbine et le réseau de courant alternatif,
la trajectoire de consigne étant une trajectoire, qui indique une vitesse de rotation de consigne en fonction de l'angle (3) différentiel détecté, afin d'atteindre une position angulaire cible entre la turbine et le réseau de courant alternatif appropriée à une alimentation synchrone.

2. Procédé suivant la revendication 1,
dans lequel
la trajectoire de consigne prévoit une courbe linéaire d'un angle (2) différentiel de consigne.

3. Procédé suivant l'une des revendications précédentes,
dans lequel
on accélère la turbine, si l'angle différentiel est plus grand que l'angle différentiel de consigne donné par la trajectoire de consigne et on la décélère, si l'angle différentiel est plus petit que l'angle différentiel de consigne donné par la trajectoire de consigne.

4. Procédé suivant l'une des revendications précédentes,
dans lequel
on détecte la vitesse différentielle entre la turbine et le réseau de courant alternatif et on en tient compte lorsque l'on suit la trajectoire de consigne.

5. Procédé suivant l'une des revendications précédentes,
dans lequel,
pour effectuer les stades B) et C), on utilise un appareil de synchronisation connu dans l'état de la technique.

6. Dispositif de commande d'une turbine,
**caractérisé en ce qu'**
il est conçu pour commander une turbine suivant un procédé selon l'une des revendications précédentes.

7. Dispositif de commande suivant la revendication précédentes,
dans lequel
il y a un appareil de synchronisation constitué pour détecter un angle (3) différentiel entre la turbine et un réseau de courant alternatif et une vitesse différentielle entre la turbine et un réseau de courant alternatif et pour transmettre à une unité de commande de la turbine des instructions d'accélération ou de décélération de la turbine, la vitesse différentielle représentant la différence de fréquence détectée par une technique de mesure entre la turbine et le réseau de courant alternatif.
